# EUROPEAN PATENT APPLICATION

(11) **EP 3 514 711 A1**
(43) Date of publication of application: **24.07.2019**
(21) Application number: 19000031.5
(22) Date of filing: 17.01.2019
(51) Int. Cl.: G06F 21/31, H04L 29/06, G06F 21/46, H04L 9/32

(54) **NOVEL ACCESS MANAGEMENT SOLUTION FOR ENDPOINT, SERVERS AND APPLICATIONS WITH AUTOMATED PASSWORD ROTATION FUNCTIONALITY**

(30) Priority: 18.01.2018 DE 202018000042 U
(71) Applicant: Diaz, Fernanda Analia, 80337 Munich (DE)
(72) Inventor: Diaz, Fernanda Analia, 80337 Munich (DE)

(57) **Abstract**

This is an enterprise access management solution that helps users to securely log in to enterprise networks using a single password or passphrase without having to change them as often as organizations require. It addresses the most important drawbacks in password authentication: uniqueness, complexity and rotation.

This solution generates a cryptographically-strong pseudo random system-password from mathematical operations carried out on values taken from the password entered by the user during login process. Given the same logon-password, the method will generate the same system-password, every time the user logs in.

The generated system-password used to log in to the system is ephemeral. This means that, once generated, the system-password will be forwarded to the authentication server and then discarded, it will never be stored and it is unknown to the user. The solution does not store any passwords or personal information either locally or remote.

Separating the users from the system-password, provides the flexibility to automate the standard system-password change procedures without user intervention, allowing shorter password rotation periods.

This method intelligently makes use of automation to enhance enterprise security, minimizing human involvement by removing manual tasks.

## Description

### FIELD OF INVENTION

This patent application relates to a method and techniques to generate a system password used to login to a computer or system and automate the password rotation without user intervention and without storing passwords or any user private information.

This solution is based on principles of "Usable Security" with the goal of developing security measures that respect human performance and their goals within a system.

### ABSTRACT

This system intelligently makes use of automation to enhance security, minimizing human involvement by removing manual tasks through process automation.

The system provides in-depth, Zero-Trust security, automating password generation and password rotation without user intervention. With process automation we remove the human factor in doing things.

Based on a mathematical algorithm to generate the passwords, the system separates users from the login process. That provides the flexibility to automate system-password changes without user intervention, allowing shorter password rotation periods. It was developed based on more than 20 years of Software engineering and IT-security experience.

Another fundamental characteristic is that the system does NOT store passwords or personal information either locally or remote.

### BACKGROUND

Access Management is one of the biggest challenges to network security for modern organisations. There is a constant effort to balance usability and security while considering human capabilities and limitations.

Endpoint authentication is a security mechanism designed to ensure that only authorized users have physical access to the machine and can connect to a given network, site or service. Password-based authentication is the most commonly used method of authentication to access devices and accounts.

User identification and authentication is regarded as the basis of computer security. In spite of many new technologies to assist with authentication, passwords remain central to access control systems in most computer systems.

The consumer Identity and Access Management (IAM) market is expected to grow from USD 14.30 Billion in 2017 to USD 31.75 Billion by 2022, at a Compound Annual Growth Rate (CAGR) of 17.3%, during the forecast period. The base year considered for the study is 2016 and the market size is calculated from 2017 to 2022 - Markets and Markets Research Report. *http:*//*www.marketsandmarkets.com*/*Market-Reports*/*consumer-iam-market-87038588.html*

### Password authentication challenges:

- **Systems used by humans need to be designed considering human behaviour:** One of the biggest IT security challenges is the human factor on password security. Most security breaches happen because of various human weaknesses: users tend to use weak, easy-to-remember passwords, users tend to re-use passwords across a multitude of accounts, users forget the passwords when they are forced to change it regularly. People are frustrated with too much decision-making. *("Security Fatigue")*
- **Users overwhelmed:**
   *"The majority of computer users felt overwhelmed and bombarded, and they got tired of being on constant alert, adopting safe behaviour, and trying to understand the nuances of security issues"* - NIST researches Report *Security Fatigue report from NIST (National Institute of Standards and Technology)* *https:*//*www.nist.gov*/*news-events*/*news*/*2016*/*10*/*security-fatigue-can-cause-computer-users-feel-hopeless-and-act-recklessly*
- **Password rotation:**
   Regularly changing passwords is an effective way to improve security and reduce attacker persistence (pass-the-hash, pass-the-ticket and Kerberos compromises). Organisations aggressively enforce rules requiring users to change passwords on a regular basis, sometimes as often as once every month. Enforcing changes and complexity requirements don't go well together: the more often users need to change their passwords, increases the likelihood that the password will be written down somewhere. *https:*//*arstechnica.com*/*business*/*2011*/*10*/*when-passwords-attack-the-problem-with-aggressive-password-policies*/
- **Password complexity:** A simple human factor analysis shows that no normal human can remember 50 different random combinations of characters, leading to one of two common solutions: either users select **non-random passwords** that are easy to remember (and easy to crack), or the users **write down the passwords** on a piece of paper or in a file on their system (also a major compromise of security).
- **Unique passwords:** It is also expected that the users select different passwords for different services and devices. IT professionals need to login many times a day into multiple accounts on multiple devices to do their work, re-using passwords is a very common practise among system administrators. Attackers will try every compromised password against multiple services. In other words, there is a domino effect - one key will open multiple doors.
- **Password storage security flaws:** *"The overall results were extremely worrying and revealed that password manager applications, despite their claims, do not provide enough protection mechanisms for the stored passwords and credentials,* " *the group said. "Instead, they abuse the users' confidence and expose them to high risks."* - security researchers TeamSIK from the Fraunhofer Institute for Secure Information Technology (SIT) in Darmstadt, Germany *https:*//*team-sik.org*/*trent_portfolio*/*password-manager-apps*/
- **Applications:** Applications themselves use privileged accounts to communicate with other applications, scripts, databases, servers and more. These accounts are often overlooked and pose significant risk, as their credentials are often hard-coded, static and rarely changed. A hacker can use these attack points to escalate privileged access throughout the organization.

**While people will always be a weak link in the information security process, by setting automated policies and controls, IT can take the human decision making out of the security equation.**

### SUMMARY

This patent application describes the techniques and benefits provided by a system for access management and automated password rotation.

A system that provides automatic regular password rotation, without user intervention and without storing passwords or any user private information.

A system that provides computer users the ability to login into an organization's network with a unique password defined by the user, without the burden to change the password regularly to fulfil organizations requirements on short period regular password rotation and password complexity.

A system that provides IT administrators the ability to login into an organization's sensitive areas such as network, systems, servers, databases, appliances and devices, with a unique password defined by the user without the burden to use different passwords for different applications and devices or to change passwords regularly to fulfil organizations requirements on short period regular password rotation and password complexity.

A system that provides IT administrators and developers to include login information in programming source code (scripts, software, applications, etc.) to connect to resources such as servers, databases and network devices, without entering the real login credentials in plain text that may reveal sensitive information if the source code is compromised. This system provides the flexibility to rotate the passwords on the target system or device without modifying the source code.

**This system provides following benefits:**
1) Improving network security by automating frequent password changes (hourly, daily, monthly), enables agility and adaptability for password rotation. Reduce attack surface for advanced attack techniques such as pass-the-hash or pass-the-ticket attacks.
2) Improving network security by supporting stronger password policies for more complex longer password without stressing users.
3) Improving network security by helping IT administrators to eliminate re-used and shared accounts (like "admin" or "root") to access all digital assets.
4) Meeting industry regulatory compliances - including PCI DSS, ISO2700x, SOX, HIPAA and others - they require enterprise account passwords to be sufficiently unique, complex and frequently changed.
5) Saving help desk and auditing costs.
6) Organizing account access data without saving any passwords either locally or remote, nor collecting any personal information. Not even the logon-password is stored.
7) Improving network security by replacing plain text, hard-coded passwords from applications and scripts.

### TECHNICAL SOLUTION

The above referenced problems are solved by a computer system comprising
a logon-means for entering a username and logon-password: a graphic user interface to prompt the user to enter username and logon-password;
a password-generating-means for generating a system-password based on the logon-password entered by the user during logon process, the system-password format pattern and a generated random-number;
a password-rotation-means for initiating automated password change process after a period of time or after a trigger for system-password expiration. This process is entirely performed by the method, without user intervention, allowing the system to implement more aggressive (shorter) password rotation periods;
a means for transmitting the system-password to an authentication server for authentication;
a means for transmitting the old and new system-password to an authentication server for password change;

Described herein is a computer system that includes instructions that are stored on one or more non-transitory machine-readable storage media, and that are executable on one or more processing devices.

Generating the system-password based on the logon-password, provides the flexibility to automate system-password changes without user intervention. Currently, system-password rotation is handled manually by the user and has the human limitations to create and remember complex, long passwords and on how frequently a user can change passwords without producing a vulnerability in the system.

The password-generating-means generates always the same secure password based on the same logon-password. Users use only one logon-password and don't have to change it, even if the organization enforces aggressive password rotation policies.

The password-generating-means does not stores the logon-password entered by the user, either locally or remote.

The password-generating-means does not stores the system-password generated either locally or remote.

The password-generating-means removes the generated system-password from computer system memory after transmission.

The system can include clients and servers. A client and a server are generally remote from each other and typically interact through a communication network. Examples of communication network include Local Area Network (LAN), Virtual Area Network (VAN), and Wide Area Network (WAN). The relationship of client and server arises by virtue of computer programs running on the respective computers and having a client-server relationship to each other.

### Password generation:

The password-generating-means may generate a format pattern during the account creation. It stores indicators regarding the length of the system-password and whether it may contain or exclude symbols, upper/lower case letters, or numbers. The amount of those characters will be randomly generated depending on the given length. The characters and positions of the predefined elements will be randomly assigned. The format information is stored as a pattern and is build up with references to characters on the user logon-password. The characters itself are not stored in the pattern.
There is no way to use this information alone to guess the final password.

A unique 128-bits secure random number will be generated and appended to the format pattern.
Every account has a unique format pattern and random number called "Account Key"

The password-generating-means may generate the system-password based on the logon-password entered by the user during logon process, the system-password format pattern and a random-number, the method comprising the steps of
a) Generating a random string using logon-password and the random number from the format pattern.
b) Transforming the string: for every reference stored in the system password format pattern, the functionality will calculate the transformations that needs to be applied to the string generated in step a) to achieve the format defined on the pattern. As a result: The password-generating-means may generate a cryptographically-strong pseudo random, highly secure system-password that is difficult to crack or guess.
   Entering a different logon-password, the characters will be assigned differently and they will not display any similarity that might help on guessing the system-password.

The password-generating-means may generate a system-password based on the references stored in the format pattern.

### Login and automated password rotation:

Based on Pluggable Authentication Module (PAM)* technology, this custom module handles login and automated password rotation. The module is an interface between the logon screen and the established authentication methods: LDAP, RADIUS, Kerberos where the credentials are validated and the access is granted.

**PAM: The Pluggable Authentication Modules (PAM) library is a generalized API for authentication-related services which allows a system administrator to add new authentication methods simply by installing new PAM module. On Windows systems, this technology is called Credential Provider.*

### Login process:

The logon-means for entering a username and logon-password is a custom graphic user interface to prompt the user to enter username and logon-password, the method comprising the steps of
a) User enters the logon-password on the logon screen as usual.
b) The system-password is generated by the password-generating-means as described above.
c) Once generated the system-password, it will be forwarded to the configured authentication server for authentication.
   Authentication server grants or denies access. The logon-means does not grant or deny access to user.

The password-generating-means may generate the system-password on-the-fly at the moment of login.

### Automated password rotation:

Administrators usually establish the password complexity and rotation period from the centralized authentication server (AD, LDAP, Kerberos, etc.)
The automated password change occurs during the login process.

The password-rotation-means may be adapted to automatically rotate the password without user intervention.

The password-rotation-means may generate a new system-password based on the logon-password entered by the user during logon process, the system-password format pattern and a new generated random-number after a pre-defined period of time or after a trigger for password rotation, and then sends the old system-password and the new system-password to the authentication server to change the password, the method comprising the steps of
a) User enters the logon-password on the logon screen as usual;
b) The system-password is generated by the password-generating-means as described above;
c) A new system-password is generated by the password-generating-means based on the logon-password entered by the user during logon process, the system-password format pattern and a new generated random-number;
d) The new system-password will be compared for similarity to the last system-password generated to avoid that the new password is rejected by the system based on similarities;
e) Old system-password and new system-password are forwarded to the authentication server;
f) When the authentication server successfully changes the system-password, the system-password format pattern and the new generated random-number, will be stored locally or system-wide.

A number of implementations have been described. Nevertheless, it will be understood that various modifications may be made without departing from the spirit and scope of the invention.
In addition, other steps may be provided, or steps may be eliminated, from the described flows, and other components may be added to, or removed from the described system. Accordingly, other implementations are within the scope of the following claims.

### Security measures:

- The account record is stored in a database on one or more non-transitory machine-readable storage media. System-password format pattern and description are stored encrypted using AES-256 encryption* and it will only be decrypted for password retrieval or rotation.
   All other information is stored in plain text. It is general information, not sensitive or related to the password generation.
   **encryption: AES-256 encryption is one of the most frequently used and most secure encryption algorithms available today. Used in combination with the 256-bits salt.*
- The system-password format is composed with references to characters on the user logon-password. The characters itself are not stored in the pattern. There is no way to use this information alone to guess the final password.
- Logon-password and system-password are not stored either locally nor remote.
- The method does not evaluate or validate system-passwords. Given a logon-password, the method generates on-the-fly a system-password and forward it to the defined authentication server that will actually validate the credentials and grant/deny access.
- During password rotation, the newly generated system-password will be compared for similarity, to ensure that no similar password will be produced.
- After generating the system-password for authentication or rotation, memory cache will be cleaned.
- Secure against password attacks:
   1) The method manages accounts without storing user's logon-passwords, system-passwords or any other personal information. It also does not provide any information regarding the password validity.
   2) Given that an attacker uses a computer program or script to generate passwords with the module entering all possible password combinations (Brute Force Attack), the passwords generated by the module will not display any similarity or pattern to make it difficult to crack or guess.
   3) Another common password attack is Dictionary Attack. Dictionary attacks work on the assumption that most passwords consist of whole words, dates, or numbers taken from a dictionary. This kind of attack can also not succeed against this method because it creates cryptographically-strong pseudo random, highly secure passwords that don't contain any human-readable word that might be included in any dictionary.

The details of one or more implementations are set forth in the accompanying drawings and description below. Other features, objects, and advantages will be apparent from the description and drawings, and from the claims.

### BRIEF DESCRIPTION OF THE DRAWINGS

Fig. 1 is a flowchart of a password generation process according to the invention;
Fig. 2 is a flowchart of a user login process according to the invention;
Fig. 3 is a flowchart of an automatic password change process according to the invention;
Fig. 4 is a flowchart of an application login process according to the invention;
Fig. 5 is a flowchart of an application automatic password change process according to the invention;

### Mode for carrying out the invention

### Account Key:

The main component of the password generation is the Account Key.
The Account Key stores the necessary information to generate the system-password. It consists of two parts: the system-password format pattern and a unique 128-bits secure random number.

During the record creation, the system-password length and complexity can be configured to meet organizations policy requirements: to use or exclude symbols, and whether the password may contain upper/lower case letters, symbols, or numbers.

The amount and positions of the predefined elements will be randomly calculated based on the defined system-password length. The format information is stored as a pattern. The format pattern contains the final positions of the selected characters, **but not the characters itself.** The solution doesn't know the user's logon-password at this point. There is no way to use this information alone to guess the final password. Every record has a unique Account Key.

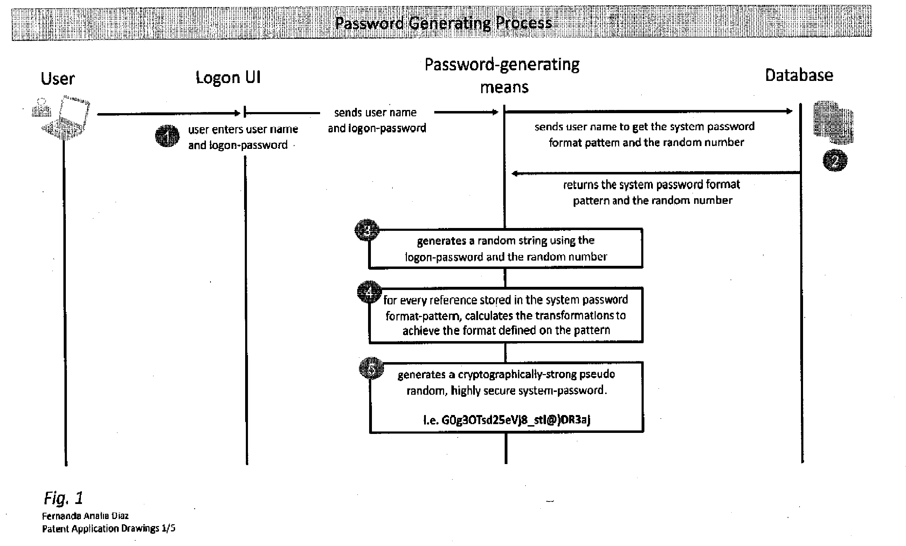

### Fig. 1 describes the password generation process.

In the following, an example of a password generation process according to the invention is described with reference to Fig. 1.
In step 1, the user enters user name and logon-password in the logon-means graphic interface; Then, in step 2, the password-generating-means retrieves the Account Key from the database.
In step 3, the password-generating-means generates a random string combining the logon-password and the random number extracted from the Account Key.
In step 4, the password-generating-means calculates the transformations based on the system-password format pattern and the logon-password entered by the user. Entering a different logon-password, the characters will be assigned differently and they will not display any similarity that might help on guessing the system- password; in step 5, the password-generating-means generates a highly secure system-password difficult to crack or guess.

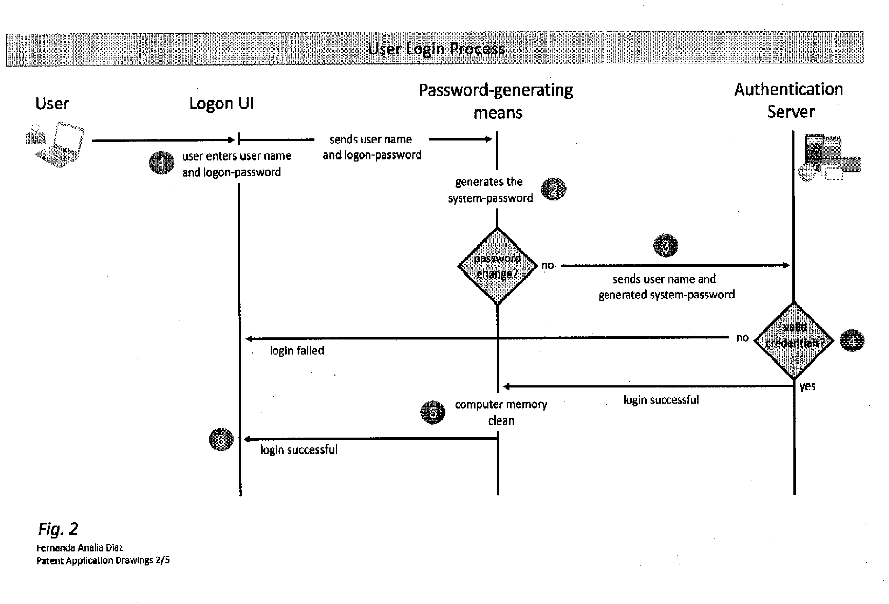

### Fig. 2 shows an example of a user login process

This example describes a user login process according to the invention. It represents the login process only, assuming that there is not system-password change required.
In step 1, the user enters user name and logon-password in the logon-means graphic interface; then, in step 2, the password-generating-means generates the system-password as described in Fig.1. Step 3, **in this case system-password change is not required,** then, the password-generating-means sends the user name and the generated system-password to the authentication server; in step 4, the authentication server validates the credentials and returns success if the credentials are valid or failure if the credentials are not valid. Authentication server grants or denies access. The password-generating-means does not grant or deny access to user.
In step 5, in case the credentials are valid, password-generating-means removes logon- and system-passwords from computer memory and in step 6, the user logs into the system.

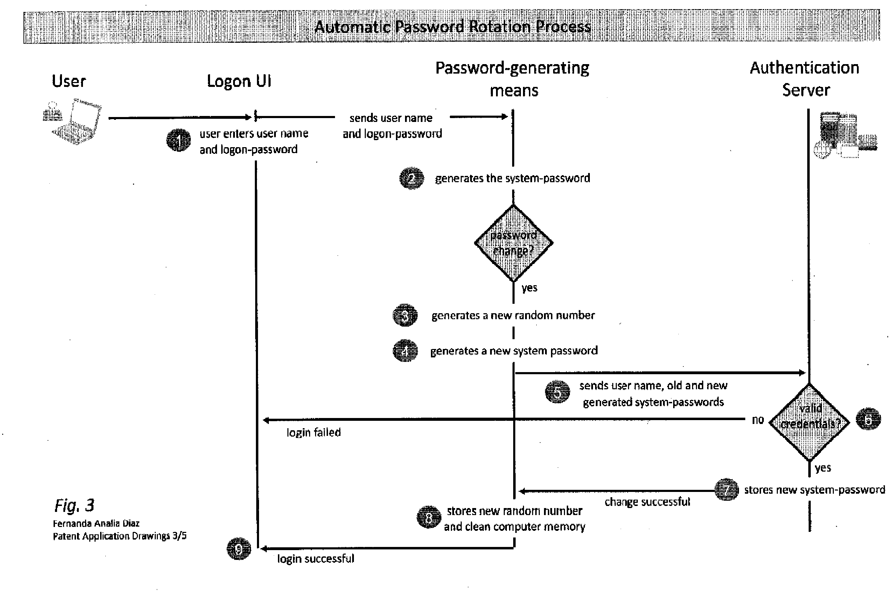

### Fig. 3 describes the automated password rotation process.

This example describes the automatic password generation and rotation process according to the invention. It represents the login process when the system-password change is required.
In step 1, the user enters user name and logon-password in the logon-means graphic interface; Then, in step 2, the password-generating-means generates the system-password as described in Fig.1. Step 3, **in this case system-password change is required,** then the password-generating-means generates a new random-number; then in step 4, generates a new system-password(*) based on the logon-password entered by the user in step 1, the system-password format pattern (the format pattern remains the same) and the new generated random-number; in step 5, the password-generating-means sends the user name, the old system-password (step 2) and the new generated system-password (step 4) to the authentication server.
Step 6, the authentication server validates the credentials (user name and old system-password).
In step 7, in case the credentials are valid, the authentication server saves the new system-password and return success if the new system-password was successfully saved or returns failure if the credentials are not valid or there were an error saving the new system-password.
In step 8, in case system-password change was successful, password-generating-means stores the new generated random number from step 3 in the database (Fig.1 step 2) and removes logon- and system-passwords from computer memory. In step 9, the user logs into the system.
(*) When a new system-password is generated, it will be compared on similarity to the old system-password using, Levenshtein distance algorithm. Levenshtein distance (LD) is a measure of the similarity between two strings. The greater the Levenshtein distance, the more different the strings are.

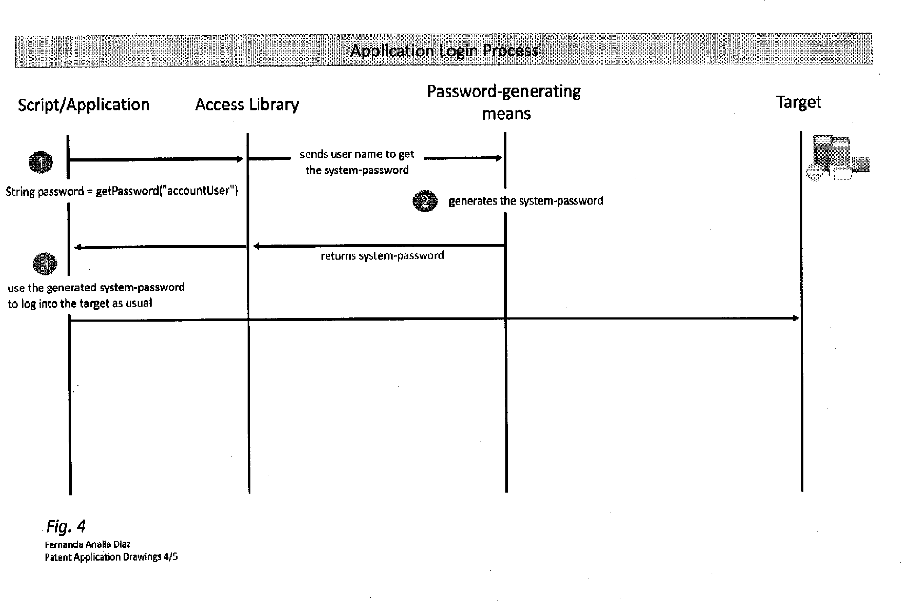

### Fig. 4 shows an example of an application login process

This example describes an application login process according to the invention. This drawing represents the way this system provides IT administrators and developers the ability to include login information in programming source code (scripts, software, applications, etc.) to connect to targets (like servers, databases, services, etc.), without entering the passwords in plain text that may reveal sensitive information if the source code is compromised. This process implements the password-generating-means as a software library and include modifications in the password generation components to fit the requirements of this use case. A software library is a collection of functions that can just be called/used within the program body.
In this use case, the password generation process described in Fig.1 logon-password entered by the user during login is replaced by an application UUID stored in the database. A Universally Unique Identifier (*UUID*) is a 128-bit number used to identify information in computer systems.
In step1, the application or script calls a library function to retrieve the password to login into a resource (server, database, etc.) i.e.: *getPassword("accountUser").* Then, in step 2, the password-generating-means generates the password as described in Fig.1. Step 2, in **this case password change is not required,** the password-generating-means returns the password. In step 3, the application or script uses the generated password to login as usual.

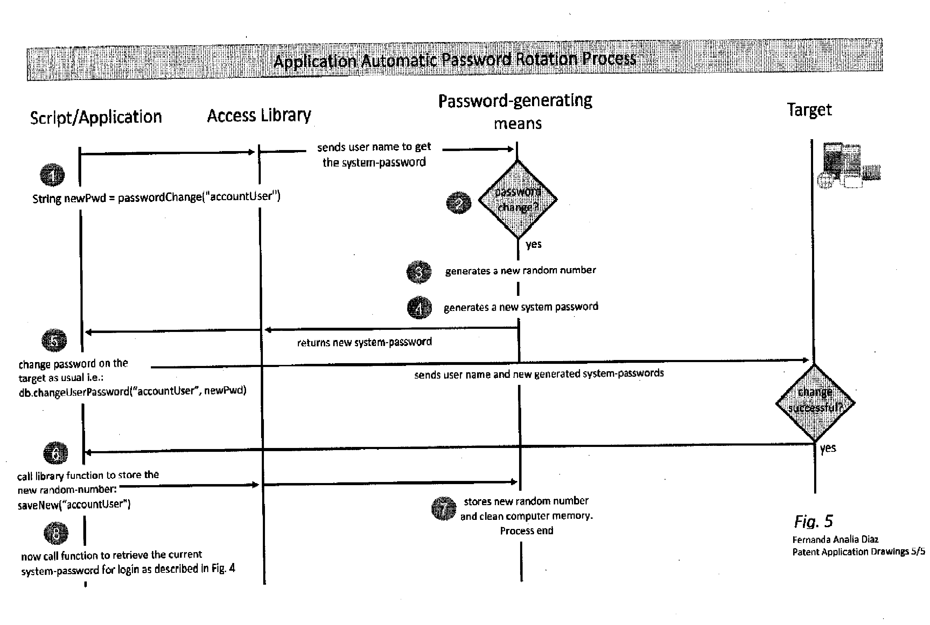

### Fig. 5 shows an example of an application automated password rotation process

This example describes an application automated password rotation process according to the invention. This methodology provides the flexibility to rotate the passwords on the target system or device without modifying the source code implementing the password-generating-means as a software library (same as described on Fig.4).
In step1, the application or script calls a library function to retrieve the password expiration date from the database (same as Fig. 1 step 2). Step 2, **in this case password change is required;** in step 3, the password-generating-means generates a new random-number; in step 4, generates a new password (same as described on Fig.4) and returns the new generated password in step 5, the password-generating-means

## Claims

1. A computer system comprising
a logon-means for entering a username and logon-password. This is a graphic user interface to prompt the user to enter username and logon-password;
a password-generating-means for generating a system-password based on the logon-password entered by the user during logon process, the system-password format pattern and a generated random-number.
a password-rotation-means for initiating automated password change process after a period of time or after a trigger for system-password expiration. This process is entirely performed by the method, without user intervention, allowing the system to implement more aggressive (shorter) password rotation periods;
a means for transmitting the system-password to an authentication server for authentication;
a means for transmitting the old and new system-password to an authentication server for password change.

2. The system according to claim 1, further comprising:
**characterized in that** the password-generating-means does not stores the logon-password entered by the user, either locally or remote;
**characterized in that** the password-generating-means does not stores the system-password generated either locally or remote;
**characterized in that** the password-generating-means removes the logon-password and the generated system-password from computer system memory after transmission.

3. The system according to claim 1, **characterized in that** the password-generating-means generates a format pattern during the account creation.
It stores indicators regarding whether the system-password may contain or exclude symbols, upper/lower case letters, or numbers. The characters, amount of characters and positions of the predefined elements will be randomly assigned. The format information is stored as a pattern and is build up with references to characters on the user logon-password. The characters itself are not stored in the pattern.

4. The system according to claim 1, **characterized in that** the password-generating-means generates the system-password based on the logon-password entered by the user during logon process, the system-password format pattern and a random-number, the method comprising the steps of
a) Generating a random string using logon-password and the random number.
b) Transforming the string: for every reference stored in the system password format pattern, the functionality will calculate the transformation that needs to be applied to the string generated in step a) to achieve the format defined on the pattern.
As a result: entering a different logon-password, the characters will be assigned differently and they will not display any similarity that might help on guessing the system-password.

5. The system according to claim 1, **characterized in that** the password-generating-means generates the system-password on-the-fly at the moment of login.

6. The system according to claim 4, **characterized in that** the password-generating-means generates a system-password based on the references stored in the format pattern.

7. The system according to claim 1, **characterized in that** the password-rotation-means generates a new system-password based on the logon-password entered by the user during logon process, the system-password format pattern and a new generated random-number after a pre-defined period of time or after a trigger for password rotation, stores the new random-number locally or system-wide and then sends the old system-password and the new system-password to the authentication server to change the password.

8. The system according to claim 7, **characterized in that** the password-rotation-means is adapted to automatically rotate the password without user intervention.

9. A method for access and automated password change in a computer system, the method comprising
entering a username and a logon-password in a logon-means;
generating a system-password based on the logon-password entered by the user during logon process, the system-password format pattern and a generated random-number;
initiating automated password change process after a period of time or after a trigger for system-password expiration. This process is entirely performed by the method, without user intervention, allowing the system to implement more aggressive (shorter) password rotation periods;
transmitting the system-password to an authentication server for authentication;
transmitting the old and new system-password to an authentication server for password change.

10. The method according to claim 9, further comprising:
**characterized in that** the password-generating-means does not stores the logon-password entered by the user, either locally or remote;
**characterized in that** the password-generating-means does not stores the system-password generated either locally or remote;
**characterized in that** the password-generating-means removes the generated system-password from computer system memory after transmission.

11. The method according to claim 9, by generating a system-password format pattern during the account creation, storing indicators regarding whether the system-password may contain or exclude symbols, upper/lower case letters, or numbers.

12. The method according to claim 9, **characterized by** generating the system-password based on the logon-password entered by the user during logon process, the system-password format pattern and a random-number.

13. The method according to claim 9, characterized the method comprising the steps of
a) Generating a random string using logon-password and the random number.
b) Transforming the string: for every reference stored in the system-password format pattern, the functionality will calculate the transformation that needs to be applied to the string generated in step a) to achieve the format defined on the system-password pattern.
As a result: entering a different logon-password, the characters will be assigned differently and they will not display any similarity that might help on guessing the system-password.

14. The method according to claim 11, **characterized in that** a system-password is generated based on the references stored in the system-password format pattern.

15. The method according to claim 9, **characterized in** by generating a new system-password based on the logon-password entered by the user during logon process, the system-password format pattern and a new generated random-number after a predefined period of time or after a trigger for password rotation, storing the new random-number locally or system-wide and then sending the old system-password and the new system-password to the authentication server to change the password.
